**Europäisches Patentamt**

**European Patent Office**

**Office européen des brevets**

(19)

(11) Publication number : **0 387 962 B1**

## (12) EUROPEAN PATENT SPECIFICATION

(45) Date of publication of patent specification :
**30.12.92 Bulletin 92/53**

(51) Int. Cl.⁵ : **B62H 3/02,** B62H 3/00,
E05B 67/38

(21) Application number : **90200592.5**

(22) Date of filing : **14.03.90**

(54) **A lockable holder for bicycle stand.**

(30) Priority : **14.03.89 DK 1218/89**

(43) Date of publication of application :
**19.09.90 Bulletin 90/38**

(45) Publication of the grant of the patent :
**30.12.92 Bulletin 92/53**

(84) Designated Contracting States :
**AT BE CH DE DK ES FR GB GR IT LI LU NL SE**

(56) References cited :
FR-A- 2 402 574
US-A- 3 934 436
US-A- 3 964 611

(73) Proprietor : **VEKSOE-TAULOV A/S
Taulov Kirkevej 60
DK-7000 Fredericia (DK)**

(72) Inventor : **Gram, Alex
Hovendgaden 49
DK-8220 Brabrand (DK)**
Inventor : **Nielsen, Jan Sjoerup
Tranevej 10 4tv
DK-2400 Koebenhavn NV (DK)**
Inventor : **Soendertoft, Jens Chr.
Solbrinken 14
DK-8300 Odder (DK)**

(74) Representative : **Gregersen, Niels Henrik
Skanderborgvej 40
DK-8000 Aarhus C (DK)**

EP 0 387 962 B1

Jouve, 18, rue Saint-Denis, 75001 PARIS

## Description

The present invention relates to a lockable holder for a bicycle stand and comprising a projecting holder part which is adapted to receive a portion of a bicycle and which comprises cooperating holding and locking means being adapted to grasp and/or to lock the bicycle portion to the holder.

In connection with stationary bicycle stands several embodiments of lockable holders are known, where a portion of a bicycle may be locked to the holder by means of a lock which belongs to the bicycle stand or by means of a loose lock, for example a wire lock or a padlock which is brought along by the cyclist. Particularly, in the latter case that disadvantage often occurs that the holder may be locked by individual cyclists - also when the holder is not in use - that is to say that public bicycle stands in this way may be "privatized" by blocking the individual holders by means of loose brought along locks which means that the capacity particularly of public bicycle stand installations may be unacceptably limited.

The invention has for its purpose to provide a lockable holder for bicycle stands and by means of which among other things the said disadvantage by simple arrangements may be relieved.

According to the invention the holder is characterized in that the locking means consist of a locking part cooperating with the holder part, said locking part including eye means being pivotally arranged in the holder part, whereby the locking part by said insertion of the bicycle portion in the holder part being adapted to take up a locking position, in which the bicycle portion being grasped in the holder part by means of the holding means, and in which the locking part may be fixed to the holder part by insertion into the eye means either a locking pawl of a lock connected with the holder part or a locking hoop of a loose padlock, said eye means being such adapted that the locking pawl or the locking hoop - in spite of that the lock in question is activated - may be removed from the eye means, if the locking part is allowed to turn in the holder part, that is if the bicycle portion is not placed in the holder part. By simple provisons is herby obtained an improved holder of the introductory mentioned type, by means of which the above-mentioned problems regarding the unauthorized "privatizing" of the bicycle stand in a simple manner may be avoided. Because, the holder may only be effectively locked by means of the stationary lock or by means of a brought along lock, if the bicycle portion is correctly placed in the holder part, since otherwise the pivotally locking part may be turned in such a way that the locking pawl or the locking hoop may be sidewardly removed from a partly open locking eye of the locking part, if the bicycle portion is not placed in the holder part, that is to say if this is empty.

As the holder according to the invention is preferably adapted to cooperate with a bicycle in the form of the handlebars thereof, the holder part is shaped - as known per see - with a double fork-like configuration comprising at opposite sides of a central cavity two fork parts at least one of which being provided with said holding and locking means in the form of a locking part which is pivotally mounted on an approximate horizontal axis and which consists of a lower preferable curved holding part and an upper locking part with an eye portion provided with a side opening, said locking part is adapted to be swung between an open position, in which the holding part is hanging down from the holder part allowing the handlebars of a bicycle to be inserted therein, a locking position, in which the holding part grasping the handlebars and the eye portion projects from the holder part through a side slit thereof and is available for receiving a locking pin or hook, and a further position, in which the eye portion - because the holder part is empty - is swung further outwards and the side opening thereof is uncovered.

In the following the invention is described in more details with reference to the accompanying drawing, in which:-

Fig. 1 is a side view of an embodiment of a holder according to the invention,

Fig. 2 a sectional view of the holder shown in Fig. 1 - seen along the sectional line II-II in Fig. 1,

Fig. 3 a side view of another embodiment of a holder according to the invention,

Fig. 4 a sectional view of the holder shown in Fig. 3 - seen along the sectional line IV-IV in Fig. 3,

Fig. 5 a side view of a further embodiment of a holder according to the invention,

Fig. 6 a sectional view of the holder shown in Fig. 5 - seen along the sectional line VI-VI in Fig. 5,

Fig. 7 a side view of a still further embodiment of a holder according to the invention,

Fig. 8 a sectional view of the holder shown in Fig. 7 - seen along the sectional line VIII-VIII in Fig. 7, and

Fig. 9 a side view of an alternative embodiment of a holder according to the invention.

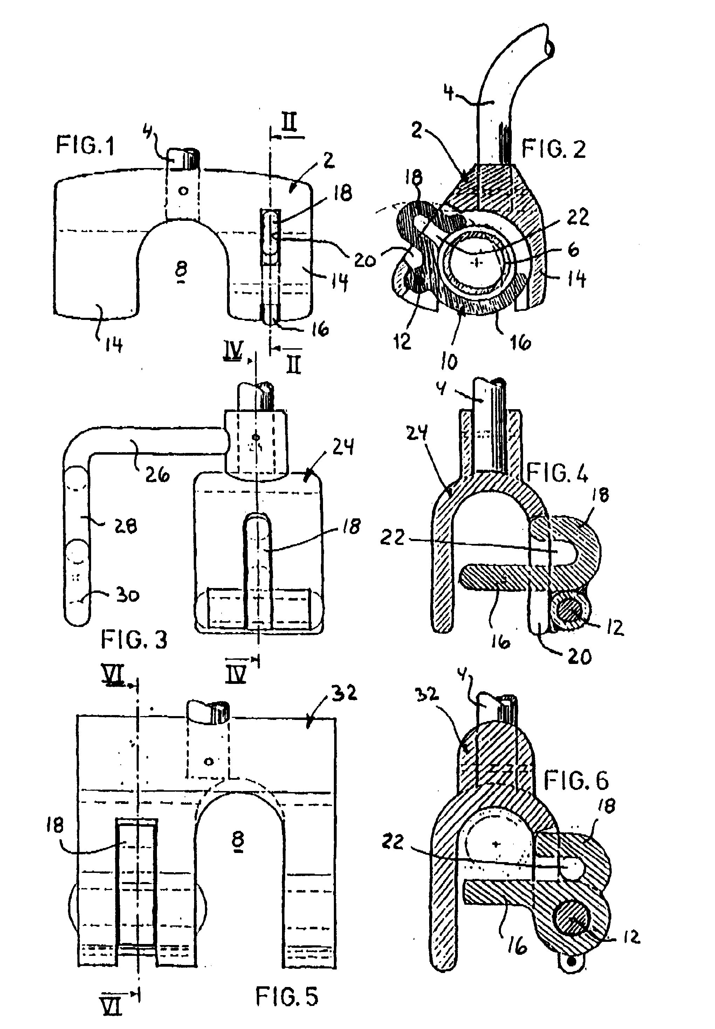

The bicycle holder or holder 2 shown in Figs. 1 and 2 is as indicated adapted to be fastened at a free end of a tubular arm member 4, which in a known manner is svingably connected to a horizontal bicycle stand beam (not shown), so that the bicycle holder 2 may be lifted up for placing the handlebars 6 under the holder 2 which then is swung downwarly over the handlebars 6 so that a cental cavity 8 is placed at the centre of the handlebars 6, that is to say that the bicycle holder 2 grasps the handlebars 6 as shown in Fig. 2. The bicycle holder 2 is - as shown to the right of Fig. 1 - provided with a locking part 10 being pivotally mounted on a swing axis 12 and which when the handlebars 6 is not inserted between holding forks 14 of the holder 2 would be swung downwards in such a manner that a lower part 16 of the lock part 10 is placed hanging down under the swing axis 12. By leading down the holder 2 over the handlebars 6, this will influenced by an eye portion 18 of the locking part 10 swing this upwards to the position shown in Fig. 2, where the eye portion 18 projects through a side slit 20 of the holder part 14, so that the handlebars 6 may be locked to the holder by means of a padlock, the locking hoop of which is led through that part of the eye portion 18 projecting from the side slit 20.

However, the eye portion 18 is provided with a side opening 22 so that the locking hoop of a padlock may be removed therefrom through the side opening 22, when the handlebars 6 are not placed between the holding forks 14 of the holder, because the eye portion 18 of the locking part 10 in that case may be swung further out through the side slit 20, so that the side opening 22 is uncovered for sidewards removal of the locking hoop. In others words the holder 2 may not be blocked for later use, that is to say that the holder 2 is ensured agains socalled "privatizing".

The bicycle holder 24 shown in Figs. 3 and 4 is adapted to grasp the handlebars at one side of the centre thereof, while a sidewards projecting hoop 26 is adapted to grasp the handlebars opposite to the centre thereof. The hoop 26, which also comprises two fork portions 28, is furthermore - as indicated - provided with an eye 30 which is adapted for extra locking of the bicycle by means of a wire lock. Otherwise, the bicycle holder 24 is on the whole constructed like the bicycle holder 2, and the holder 24 is used in a quite similar manner to lock the handlebars of a bicycle.

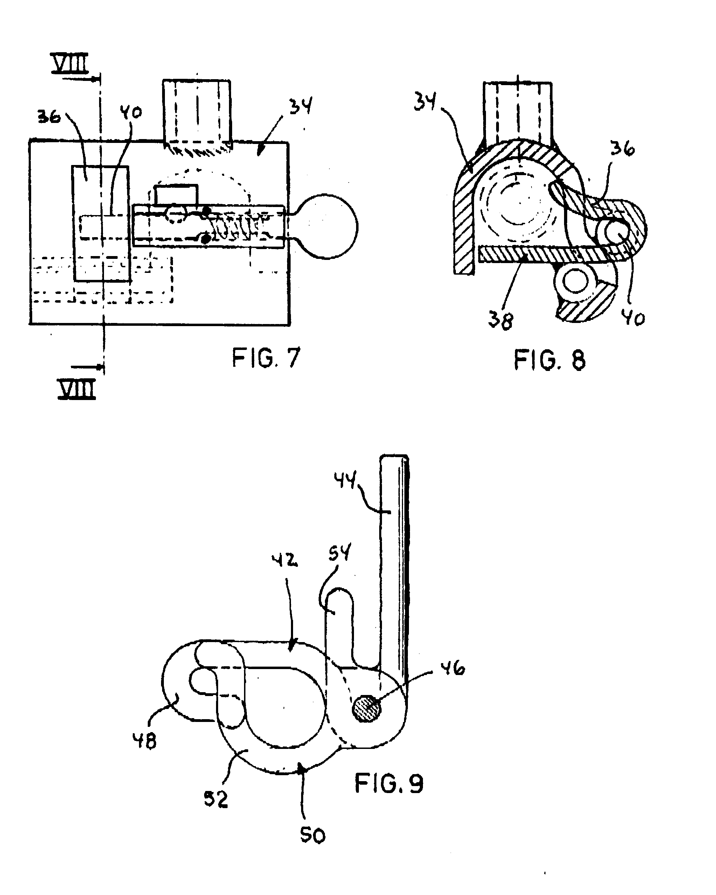

The bicycle holder 32 shown in Figs 5 and 6 is on the whole constructed like the bicycle holder 2 and has a similar function. Also the bicycle holder 34 shown in Figs. 7 and 8 corresponds in its construction to the previously described bicycle holders; but here is an eye portion 36 of the locking part 38 adapted to be locked by means of a stationary, key-operated locking pin 40.

The bicycle holder 42 shown in Fig. 9 is as an alternative made from round iron, where a stem portion 44 is adapted to be sucured inside an end portion of a tubular arm member of a bicycle stand. The stem portion 44 is bent around a swing axis 46 and continues after that outwards and forms an open eye portion 48. A swingable part 50 of the bicycle holder 42 is also made from round iron with a lower part 52 and an upper part 54 which is brought into the shwon position by means of the handlebars when this is let upwards towards the firm part of the holder connected with the stem portion 44. Preferably, the swingable portion 50 consists of two uniform portions being mutually connected and placed at opposite sides of the firm portion connected with the stem portion 44.

## Claims

1. A lockable holder (2, 24, 32, 34, 42) for a bicycle stand and comprising a projecting holder part (14) being adapted to receive a portion (6) of a bicycle and which comprises cooperating holding and locking means (16, 18) being adapted to grasp and/or to lock the bicycle portion (6) to the holder part (14) which comprises activating means being adapted by insertion of the bicycle portion (6) in the holder part (14) to influence the holding means (16) to grasp around the bicycle portion (6), **characterized** in that the locking means consist of a locking part (10) cooperating with the holder part (14), said locking part (10) including eye means (18) being pivotally arranged in the holder part (14), whereby the locking part by said insertion of the bicycle portion (6) in the holder part (14) being adapted to take up a locking position, in which the bicycle portion (6) being grasped in the holder part (14) by means of the holding means (16), and in which the locking part (10) may be fixed to the holder part (14) by insertion into the eye means either a locking pawl of a lock connected with the holder part or a locking hoop of a loose padlock, said eye means (18) being such adapted that the locking pawl or the locking hoop - in spite of that the lock in question being activated - may be removed from the eye means (18), if the locking part (10) is allowed to turn in the holder part (14), that is if the bicycle portion (6) is not placed in the holder part (14).

2. A holder (2, 24, 32, 34, 42) according to claim 1 and adapted to cooperate with a bicycle portion in the form of the handlebars thereof, **characterized** in that the holder part (14) is shaped - as known per see - with a double forklike configuration comprising at opposite sides of a central cavity (8) two fork parts at least one of which being provided with said holding and locking means in the form of a locking part (10) which is pivotally mounted on an approximate horizontal axis (12) and which consists of a lower preferable curved holding part (16) and an upper locking part with an eye portion (18) provided with a side opening (22), said locking part (10) is adapted to be swung between an open position, in which the holding part (16) is hanging down from the holder part (14) allowing the handlebars of a bicycle to be inserted therein, a locking position, in which the holding part (16) is grasping the handlebars and the eye portion (18) projects from the holder part (14) through a side slit (20) and is available for receiving a locking pin or hook, and a further position, in which the eye portion (18) - because the holder part is empty - is swung further outwards and the side opening (22) thereof is uncovered.

## Patentansprüche

1. Eine verschließbare Halterung (2, 24, 32, 34, 42) für einen Fahrradstand, die ein herausragendes Halterteil (14) enthält, das so ausgebildet ist, daß es einen Teil (6) eines Fahrrades aufnimmt, und die eine zusammenwirkende Halte- und Verschlußvorrichtung (16, 18) enthält, die so ausgebildet ist, daß sie das Fahrradteil (6) faßt und-/oder mit dem Halterteil (14) verschließt, die eine Vorrichtung zur Aktivierung enthält, die so ausgebildet ist, das sie durch Einführen des Fahrradteils (6) in das Halterteil (14) die Haltevorrichtung (16) beeinflußt, das Fahrradteil (6) zu umfassen, dadurch gekennzeichnet, daß die Verschlußvorrichtung aus einem Schließteil (10) besteht, das mit der Haltevorrichtung (14) zusammenarbeitet, wobei das Schließteil (10) eine Öse (18) enthält, die drehbar im Halterteil (14) angeordnet ist, wodurch das Schließteil (10) durch das Einführen des Fahrradteils (6) in das Halterteil (14) so eingerichtet ist, daß eine Schließstellung eingenommen wird, in der das Fahrradteil (6) durch die Haltevorrichtung (16) in dem Halterteil (14) gefaßt wird und in der das Schließteil (10) an dem Halterteil (14) durch Einführen entweder einer Sperrklinke eines mit dem Halterteil verbundenen Verschlusses oder eines Verschlußringes von einem losen Vorhängeschloß in die Öse (18) befestigbar ist, wobei die Öse (18) so ausgebildet ist, daß die Sperrklinke oder der Verschluß - obwohl das in Frage kommenden Schloß aktiviert ist - aus der Öse (18) entfernt werden können, wenn es dem Schließteil (10) möglich ist, in das Halterteil (14) zu drehen, d.h., wenn das Fahrradteil (6) sich nicht in dem Halterteil (14) befindet.

2. Eine Halterung (2, 24, 32, 34, 42) nach Anspruch 1, die so ausgebildet ist, daß sie mit einem Fahrradteil in Form von dessen Lenkstange zusammenwirkt, dadurch gekennzeichnet, daß das Halterteil (14) in Form - wie an sich bekannt - einer doppelten, gabelähnlichen Ausbildung geformt ist, die an entgegengesetzten Seiten einer zentralen Ausdehnung zwei Gabelteile ausweist, von denen mindestens eins mit der Halte- und Verschlußvorrichtung in Form eines Schließteils (10) ausgestattet ist, der drehbar auf einer ungefähr waagerechten Achse (12) angebracht ist, und die eine untere, vorzugsweise gekrümmte Haltevorrichtung (16) und ein oberes Schließteil mit einem Ösenteil (18) enthält, das mit einer seitlichen Öffnung (22) versehen ist, wobei das Schließteil (10) so ausgebildet ist, daß es in einer offenen Stellung, in der die Haltervorrichtung (16) vom Halterteil (14) herabhängt, die Einführung der Lenkstange eines Fahrrades ermöglicht, in eine geschlossene Stellung, in der die Haltevorrichtung (16) die Lenkstange faßt und den Ösenbereich (18) aus dem Halterteil (14) durch einen seitlichen Schlitz (20) herausragt und einen Schließbolzen oder -ring aufnehmen kann, und in eine weitere Stellung schwingbar ist, in der der Ösenbereich (18), da der Haltebereich leer ist, weiter nach außen schwingt und die seitliche Öffnung (22) derselben unbedeckt ist.

## Revendications

1. Dispositif de maintien verrouillable (2, 24, 32, 34, 42) pour un support de bicyclette, comportant une pièce (14) de maintien en saillie destinée à recevoir une partie (G) d'une bicyclette et comportant des moyens coopérants de maintien et de verrouillage (16, 18) destinés à enserrer et/ou verrouiller la partie (6) de bicyclette sur la pièce (14) de maintien qui comporte des moyens d'activation destinés, sous l'effet de l'introduction de la partie (6) de bicyclette dans la pièce (14) de maintien, à amener les moyens de maintien (16) à enserrer la partie (6) de bicyclette, caractérisé en ce que les moyens de verrouillage comprennent une pièce (10) de verrouillage coopérant avec la pièce (14) de maintien, ladite pièce (10) de verrouillage comprenant un moyen à oeil (18) monté de façon pivotante dans la pièce (14) de maintien, de manière que la pièce de verrouillage, sous l'effet de ladite introduction de la partie (6) de bicyclette dans la pièce (14) de maintien, soit destinée à prendre une position de verrouillage dans laquelle la partie (6) de bicyclette est enserrée dans la pièce (14) de maintien à l'aide des moyens (16) de maintien, et dans laquelle la pièce (10) de verrouillage peut être fixée à la pièce (14) de maintien par introduction dans le moyen à oeil soit d'un cliquet de verrouillage d'un verrou relié à la pièce de maintien, soit d'une boucle de verrouillage d'un cadenas libre, ledit moyen à oeil (18) étant conçu pour que le cliquet de verrouillage ou la boucle de verrouillage - malgré le fait que le verrou en question soit actionné - puisse être enlevé du moyen à oeil (18), si la pièce (10) de verrouillage peut tourner dans la pièce (14) de maintien, c'est-à-dire si la partie (6) de la bicyclette n'est pas placée dans la pièce (14) de maintien.

2. Dispositif de maintien (2, 24, 32, 34, 42) selon la revendication 1, destiné à coopérer avec une partie de bicyclette sous la forme du guidon de celle-ci, caractérisé en ce que la pièce (14) de maintien est formée - comme cela est connu en soi - de façon à avoir une configuration analogue à une fourche double comprenant, sur des côtés opposés d'une cavité centrale (8), deux pièces de fourche dont au moins l'une est pourvue desdits moyens de maintien de verrouillage sous la forme d'une pièce (10) de verrouillage qui est montée de façon pivotante sur un axe approximativement horizontal (12) et qui est constituée d'une pièce inférieure (16) de maintien, avantageusement incurvée, et d'une pièce supérieure de verrouillage ayant une partie à oeil (18) qui présente une ouverture latérale (22), ladite pièce (10) de verrouillage étant destinée à être basculée entre une position ouverte, dans laquelle la pièce (16) de maintien est suspendue à la pièce (14) de maintien, permettant au guidon d'une bicyclette d'y être introduit, une position de verrouillage, dans laquelle la pièce (16) de maintien enserre le guidon et la partie à oeil (18) fait saillie de la pièce (14) de maintien à travers une fente latérale (20) et est disponible pour recevoir une broche ou un crochet de verrouillage, et une autre position dans laquelle la partie à oeil (18) - du fait que la pièce de maintien est vide - est basculée davantage vers l'extérieur et son ouverture latérale (22) est à découvert.

FIG.1

FIG. 2

FIG. 3

FIG. 4

FIG. 5

FIG. 6

FIG. 7

FIG. 8

FIG. 9